# EUROPÄISCHE PATENTSCHRIFT

(11) **EP 1 628 853 B1**
(45) Veröffentlichungstag und Bekanntmachung des Hinweises auf die Patenterteilung: **08.09.2010**
(21) Anmeldenummer: 04739345.9
(22) Anmeldetag: 26.05.2004
(51) Int. Cl.: B60N 2/48

(54) **CRASHAKTIVE KOPFSTÜTZE**
CRASH-ACTIVE HEADREST
APPUI-TETE ACTIF LORS D'UN CHOC

(30) Priorität: 05.06.2003 DE 10325472
(43) Veröffentlichungstag der Anmeldung: 01.03.2006
(73) Patentinhaber: KEIPER GmbH & Co. KG, 67657 Kaiserslautern (DE)
(72) Erfinder: HIPPEL, Daniel, 67722 Winnweiler (DE); KLEIN, Harald, 66909 Matzenbach (DE); SCHILLING, Jürgen, 67659 Kaiserslautern-Erlenbach (DE); DIEHL, Andreas, 67731 Otterbach (DE)
(74) Vertreter: Patentanwälte Hosenthien-Held und Dr. Held
(86) Internationale Anmeldenummer: PCT/EP2004/005631
(87) Internationale Veröffentlichungsnummer: WO 2004/108472

(56) Entgegenhaltungen:
- DE-A- 10 202 598
- DE-A- 19 923 659
- DE-A- 19 951 966
- FR-A- 2 832 364
- US-A1- 2002 043 860
- US-A1- 2003 057 758

## Beschreibung

Die Erfindung betrifft eine Kopfstütze mit den Merkmalen des Oberbegriffs des Anspruches 1.

Eine Kopfstütze dieser Art ist in der US 2003/0057758 A1 beschrieben. Als Energiespeicher ist eine magnetisch gehältene Feder vorgesehen, welche im Crashfall mittels eines Federhebels ein Viergelenk beaufschlagt und ausfährt. Das Viergelenk wird im Normalgebrauch reibschlüssig gehalten und kann daher manuell von der Ausgangsstellung in eine weiter Komfortstellung gebracht werden. Aus der DE 199 51 966 A1 ist eine Kopfstütze bekannt, bei welcher das Prallelement mittels eines als Parallelogramm ausgebildeten Viergelenks im Crashfall ausfährt, wobei als Antrieb ein federbelasteter Schwenkarm dient, welcher in der Crashstellung verriegelt. Mittels der Federbelastung ist auch ein Überführung von der Ausgangsstellung in eine weitere Komfortstellung möglich. Eine weitere crashaktive Kopfstütze ist in der FR 2 832 364 A1 beschrieben.

Der Erfindung liegt die Aufgabe zu Grunde, eine Kopfstütze der eingangs genannten Art zu verbessern. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Die Ausbildung der Kopfstütze für wenigstens eine weitere Komfortstellung, in die sie im Normalgebrauch aus der Ausgangsstellung heraus überführbar ist, hat den Vorteil, dass die prinzipiell gegebene Beweglichkeit der Kopfstütze auch zur Komfortsteigerung eingesetzt werden kann. Die Ausgangsstellung ist dabei eine erste Komfortstellung. Dabei kann im Crashfall aus jeder Komfortstellung heraus eine Crashstellung eingenommen werden. Dadurch, dass ein motorischer, pneumatischer oder hydraulischer Antrieb vorgesehen ist, kann dieser Übergang in die weiteren Komfortstellungen für den Insassen bequem und ohne Aufwand erfolgen, und zwar insbesondere während er einsitzt, so dass ein Wechsel zwischen manuellem Einstellen und Austesten zur iterativen Annäherung an die Idealstellung entfällt. Die - unter Einbeziehung des Ausgangsstellung - wenigstens zwei Komfortstellungen werden also nicht manuell, sondern mittels des Antriebs angefahren. Um den Übergang von der Ausgangsstellung (oder einer anderen Komfortstellung) in die Crashstellung unabhängig vom Übergang von der Ausgangsstellung in eine andere Komfortstellung zu halten, sind für diese beiden Übergänge verschiedene Antriebe vorgesehen, also insgesamt zwei Antriebe.

Mehrere Crashstellungen, die dann durch eine Crashsperre jeweils nach hinten gesperrt sind, haben den Vorteil, dass im Crashfall das sich vorwärts bewegende Prallelement unmittelbar nach Kontakt mit dem sich nach hinten bewegenden Kopf des Insassens gesperrt werden kann. Der Kopf wird dann möglichst weit vorne aufgefangen und erhält keinen zusätzlichen Impuls durch eine ungebremste Kopfstütze. Dies verhindert zusätzliche Belastungen für den Insassen. Für eine einfache und kostengünstige Realisierung einer solchen Crashsperre kann am Träger ein wenigstens teilweise bewegliches Crashsperrenteil und an wenigstens einer der Schwingen oder einem zusammen mit den Schwingen bewegten Bauteil eine Crashsperrenverzahnung, welche in jeder Crashstellung mit dem Crashsperrenteil zusammenwirkt, vorgesehen sein, wobei beispielsweise durch mehrere Zähne mehrere Crashstellungen definiert werden. Durch eine Art Sägezahnform wird die Sperrwirkung auf eine Richtung beschränkt, d.h. die Vorwärtsbewegung des Prallelementes wird nicht behindert.

Der Antrieb wirkt über einen Führungsstößel in der Art eines Armes oder über ein Spindel-Spindelmutter-System auf die Kinematik der Kopfstütze ein, so dass günstige Hebelverhältnisse erreicht werden können. Zwischen dem Antrieb und dem Führungsstößel kann beispielsweise ein schwenkbarer Verstellhebel wirksam sein, da ein solcher einfach an einem Motor oder einem Zylinder anzukoppeln ist.

Der Führungsstößel weist vorzugsweise einen Stößelabschnitt auf, welcher am Viergelenk oder an einem Querverbinder zwischen den vorgesehenen Viergelenken anliegt und das bzw. die Viergelenke in Ausfahrrichtung beaufschlagt. Für die Bewegung in die Gegenrichtung, also in Einfahrrichtung, ist beispielsweise eine das Viergelenk beaufschlagende Rückstellfeder neben dem Führungsstößel angeordnet, worunter auch eine Anordnung um den Führungsstößel herum verstanden werden soll. Sofern kein Wert auf die Rückstellbewegung gelegt wird, kann auch eine Clipsverbindung oder dergleichen den Führungsstößel eingefahren halten. Für eine ungehinderte Bewegung des bzw. der Viergelenke beim Übergang in die Crashstellung, die zugleich ein Rücksetzen erleichert, weist der Führungsstößel vorzugsweise noch einen Führungsabschnitt auf, welcher einen gegenüber dem Stößelabschnitt geringeren Durchmesser aufweist, so daß er sich vom Viergelenk oder Querverbinder lösen kann. Der vorzugsweise stufenförmige Übergangsbereich zwischen den unterschiedlichen Durchmessern kann als Anschlag dienen.

Der erfindungsgemäß vorgesehene Antrieb kann auch dazu verwendet werden, die Kopfstütze bereits vor dem Crash in die Crashstellung auszufahren, beispielsweise auf ein Signal eines Pre-Crash-Sensors hin, der aufgrund von geringen Abständen des Fahrzeuges zum Vordermann oder Hintermann oder einer starken Bremsung einen bevorstehenden Crash erkennt. Vorzugsweise bleibt die Auslösung der Crash-Funktion durch eine hierfür vorgesehene Auslöseeinheit dadurch vollständig erhalten und überlagert die Komforteinstellfunktion und die Pre-Crash-Funktion. Selbst wenn das Prallelement vollständig ausgefahren wird, erfolgt dann bei einem Crash die Auslösung der Crash-Funktion durch die besagte Auslöseeinheit.

Durch obere und untere Schwingen, welche eine von der Parallelität abweichende Ausrichtung zueinander einnehmen, also durch ein von der Parallelogrammform abweichendes Viergelenk, wird das System der Kopfstütze stabilisiert. Zunächst wird in der Ausgangsstellung ein Totpunkt im Viergelenk vermieden, welcher das Ausfahren im Crashfall erschweren könnte. Des weiteren kann der bei Kräften von vorne oder von oben auf die Schwingen relevante Hebelarm kurz gehalten werden. Schließlich kann auch ein günstigerer Auffangwinkel erreicht werden. Erreicht wird dies alles vorzugsweise durch unterschiedliche Längen der Schwingen, beispielsweise indem die unteren Schwingen länger als die oberen Schwingen sind, soweit es die Abstände der Gelenke im Viergelenk betrifft. Die langen unteren Schwingen haben noch den Vorteil, daß beim Ausfahren des Viergelenks das auf dem Prallelement vorgesehene Polsterteil sich weitgehend tangential in Fahrtrichtung nach vorne bewegt, was eine einfachere Verblendung erlaubt und Kollisionen im unteren Bereich verhindert.

Ein reversibles Rücksetzen der Kopfstütze nach einem Crash ermöglicht einen erneuten Einsatz der Kopfstütze, was Material- und Werkstattkosten spart. Vorzugsweise kann der Insasse selber die Kopfstütze rücksetzen, was wiederum Werkstattkosten spart. Hierfür ist ein Rücksetzer, beispielsweise ein in der Kopfstütze integriertes, bewegliches Zug-, Druck- oder Drehelement oder ein nach einem Crash in die Kopfstütze einführbares Werkzeug vorgesehen. Der Rücksetzer bringt beispielsweise die Crashsperre - und gegebenenfalls eine Magnetauslösung - zurück in die Ausgangsposition. Ein in die Kopfstütze integrierter Rücksetzer ist vorzugsweise erst nach dem Crash sichtbar, um eine vorzeitige Betätigung auszuschließen. Ein als Werkzeug ausgebildeter Rücksetzer ist vorzugsweise in seiner Längsrichtung in die Kopfstütze einführbar, so daß er eine im wesentlichen längliche Grundform aufweist und damit bei Nichtgebrauch leicht zu verstauen ist.

Eine Ausbildung des Energiespeichers als gespannte Feder hat den Vorteil, daß mit einer solchen Feder genügend Energie für ein rasches Ausfahren des Viergelenks gespeichert werden kann. Das Halten dieser gespannten Feder mittels einer schwenkbaren Klinke, was direkt oder indirekt durch Halten eines von der Feder beaufschlagten Elementes erfolgt, hat den Vorteil, daß die Feder einerseits im Verhältnis zur Klinke formschlüssig gehalten wird und andererseits durch eine geeignete Ausrichtung der Klinke günstige Hebelverhältnisse geschaffen werden, so daß die Haltekraft gering ausgelegt werden kann.

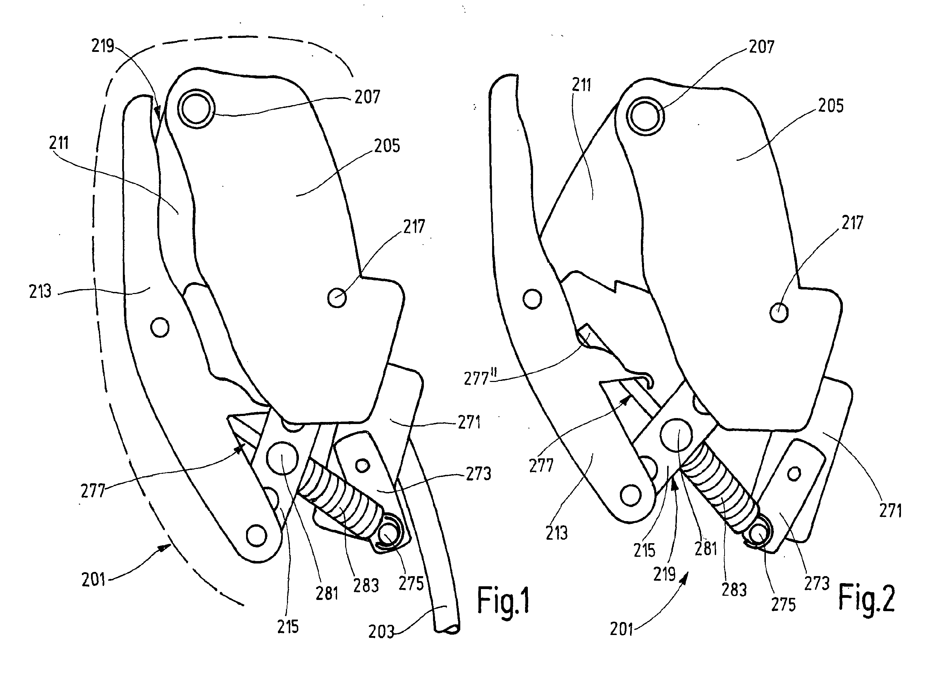

Im folgenden ist die Erfindung anhand eines in der Zeichnung dargestellten Ausführungsbeispiels näher erläutert. Es zeigen
- Fig. 1: eine Seitenansicht der Struktur des Ausführungsbeispiels in der Ausgangs- stellung,
- Fig. 2: eine Fig. 1 entsprechende Darstellung in einer Komfortstellung,

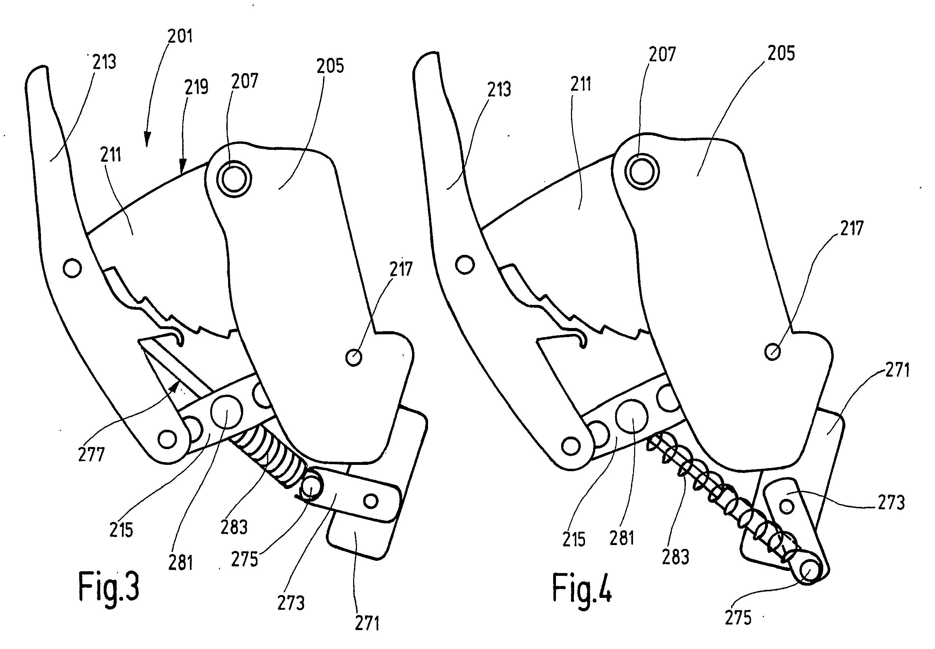

- Fig. 3: eine Fig. 1 entsprechende Darstellung in der Crashstellung unter Verwendung der Pre-Crash-Funktion,
- Fig. 4: eine Fig. 3 entsprechende Darstellung in der Crashstellung ohne Verwendung der Pre-Crash-Funktion, und

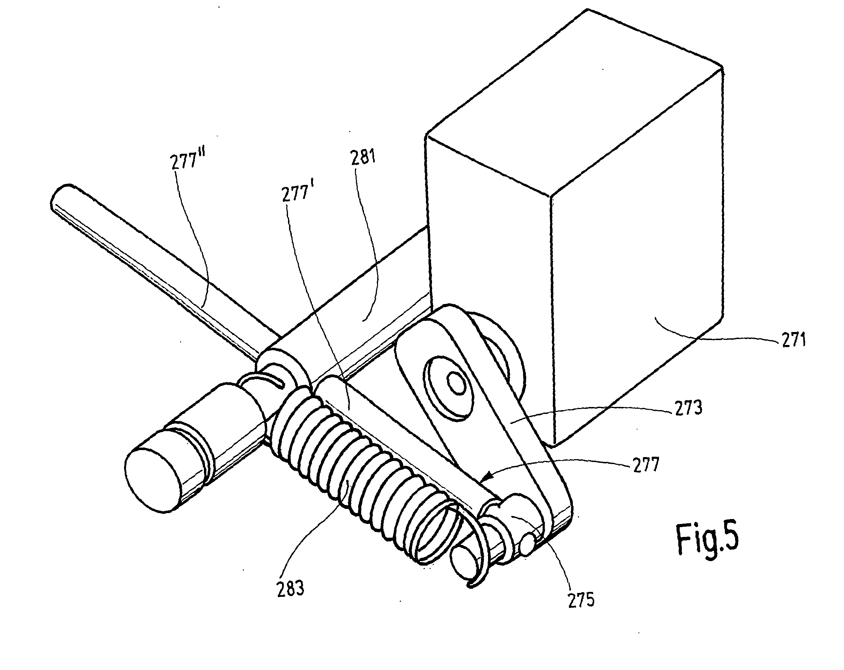

- Fig. 5: eine perspektivische Ansicht des Antriebs für die Komforteinstellung und Pre-Crash-Funktion.

Im Ausführungsbeispiel ist eine Kopfstütze 201 für einen Fahrzeugsitz eines Kraftfahrzeuges vorgesehen. Die Kopfstütze 201 ist mittels zweier paralleler Kopfstützenstangen 203, die verschieblich in der Rückenlehne des Fahrzeugsitzes gehaltert sind, in ihrer Höhe einstellbar. Die Kopfstützenstangen 203 sind mit ihrem oberen Ende fest in einen quer zu den Kopfstützenstangen 203 angeordneten Träger 205 eingeführt. Am oberen Ende des Trägers 205 ist eine horizontal angeordnete, quer zu den Kopfstützenstangen 203 verlaufende Achse 207 im Träger 205 gelagert.

Auf der Achse 207 ist ein Paar oberer Schwingen 211 schwenkbar gelagert, welche voneinander beabstandet angeordnet sind und eine näherungsweise dreieckige Grundform aufweisen, wobei die Achse 207 in einer Ecke jeder oberen Schwinge 211 angeordnet ist. Die oberen Schwingen 211 weisen parallel zueinander nach vorne und nach unten. In der vordersten Ecke jeder oberen Schwinge 211 ist letztere am oberen Ende eines gemeinsamen Prallelements 213 angelenkt, welches in Fahrtrichtung vor dem Träger 205 angeordnet ist. Das Prallelement 213 besteht im wesentlichen aus zwei seitlich abgekröpften Schenkeln, welche miteinander durch zwei parallel zur Achse 207 verlaufende Quertraversen verbunden sind. Aus fertigungstechnischen Gründen kann das als Kunststoff-Spitzgußteil gefertigte Prallelement 213 aus zwei im wesentlichen spiegelbildlichen Hälften zusammengefügt sein. Auf dem Prallelement 213 ist ein Polsterteil angeordnet, wobei das Prallelement 213 zugleich der Polsterträger sein kann, d.h. das Polster direkt am Prallelement 213 befestigt sein kann.

Ein Paar unterer Schwingen 215 von länglicher Gestalt sind einerseits jeweils mittels eines horizontalen, zur Achse 207 parallelen Schwingenlagerbolzens 217 am Träger 205 und andererseits am unteren Ende des Prallelements 213 angelenkt. Der Träger 205, die obere Schwinge 211, das Prallelement 213 und die untere Schwinge 215 bilden jeweils ein Viergelenk 219. Dabei ist die untere Schwinge 215 länger als die obere Schwinge 211, so daß die obere Schwinge 211 und die untere Schwinge 215 nicht parallel sind. Zudem schwenken die obere Schwinge 211 und die zugehörige untere Schwinge 215 nicht in der gleichen Ebene, sondern sind entsprechend der Abkröpfung des Prallelementes 213 versetzt zueinander angeordnet.

Zwischen den beiden oberen Schwingen 211 ist ein nicht näher dargestelltes Fangblech schwenkbar auf der Achse 207 gelagert, welches von einer ebenfalls nicht dargestellten Doppelschenkelfeder beaufschlagt an einem Haltebolzen von einer ebenfalls nicht dargestellten, schwenkbaren Klinke gehalten wird. Die Klinke wiederum wird indirekt durch eine magnetische Haltevorrichtung gesperrt gehalten. Jede obere Schwinge 211 trägt eine sägezahnartige Crashsperrenverzahnung, welche zum Zusammenwirken mit jeweils einem am Träger 205 angelenkten Crashsperrenteil ausgelegt ist. Crashsperrenverzahnung und Crashsperrenteil bilden zusammen eine Crashsperre.

Im unteren Bereich des Trägers 205 ist ein Servomotor 271 gelagert, welcher aus einem Elektromotor und einem untersetzenden Getriebe besteht. Der Servomotor 271 nimmt mit einer horizontal angeordneten Welle einen drehfest angebrachten Verstellhebel 273 mit. In der bisher beschriebenen Ausgangsstellung ragt der Verstellhebel 273 schräg nach unten und hinten. Am freien Ende des Verstellhebels 273 steht parallel zur Welle ein um seine Längsachse drehbarer Verstellbolzen 275 ab, an welchem ein Ende eines Führungsstößels 277 angebracht ist. Der Führungsstößel 277 besteht aus einem zylindrischen Stößelabschnitt 277' mit einem ersten Durchmesser und einem ebenfalls zylindrischen, mit dem Stößelabschnitt 277' fluchtenden Führungsabschnitt 277" mit einem zweiten Durchmesser, der kleiner ist als der erste Durchmesser.

Zwischen den beiden unteren Schwingen 215 ist ein näherungsweise zylindrischer Querverbinder 281 angebracht. Der Führungsstößel 277 ist so angeordnet, daß der Stößelabschnitt 277' zwischen dem Verstellbolzen 275 und dem Querverbinder 281 angeordnet ist und der Führungsabschnitt 277" durch eine radiale Querbohrung des Querverbinders 281 gesteckt ist. Der als Stufe ausgebildete Übergang zwischen dem Stößelabschnitt 277' und dem Führungsabschnitt 277" dient für den Querverbinder 281 als Anschlag nach hinten, wobei eine zwischen dem Verstellbolzen 275 und dem Querverbinder 281 eingehängte, neben dem Führungsstößel 277 angeordnete Rückstellfeder 283 den Querverbinder 281 gegen diesen Anschlag zieht.

Die erfindungsgemäße Kopfstütze 201 hat drei Funktionen, nämlich eine Crash-Funktion, eine Komforteinstellfunktion und eine Pre-Crash-Funktion.

Im Crashfall wird über eine Steuerung, den Haltemechanismus und die Klinke, welche zusammen eine Auslöseeinheit bilden, die als Energiespeicher (Antrieb) dienende Doppelschenkelfeder freigegeben, welche darauf hin mittels des Fangblechs auf das Prallelement drückt und mittels der Viergelenke 219 auf den beiden Seiten der Kopfstütze 201 in die allervorderste Stellung, die sogenannte Crashstellung, ausfährt. Die Crashsperre sichert die Viergelenke 219 gegen ein erneutes Einfahren aufgrund eines Aufprallen des Kopfes des Insassens auf das Prallelement 213. Nach dem Crash kann die Kopfstütze 201 durch Lösen der Crashsperre reversibel zurückgesetzt werden.

Bei der Komforteinstellung wird durch den als Antrieb dienenden Servomotor 271 der Verstellhebel 273 mit dem Verstellbolzen 275 geschwenkt. Für ein Ausfahren des Prallelementes 213 von der Ausgangsstellung in eine von mehreren, weiter vorne gelegenen Komfortstellungen wird bei einer Schwenkbewegung des Verstellhebels 273 nach vorne (in der Zeichnung im Uhrzeigersinn) der Querverbinder 281 mittels des Stößelabschnitts 277' des Führungsstößels 277 mit Druck in Ausfahrrichtung beaufschlagt. Für ein Einfahren des Prallelementes 213 zurück in eine hintere Komfortstellung oder in die Ausgangsstellung wird mit einer Schwenkbewegung des Verstellhebels 273 nach hinten (in der Zeichnung gegen den Uhrzeigersinn) der Querverbinder 281 über die Rückstellfeder 283 in Einfahrrichtung zurückgezogen.

Für die Pre-Crash-Funktion erhält der Servomotor 271 von seiner Steuerung bei einem drohenden Crash das Signal, ein Ausfahren entsprechend der zuvor beschriebenen Komforteinstellung nach vorne vorzunehmen, aber über die vorderste Komfortstellung hinaus in die Crashstellung, in welcher der Verstellhebel 273 nach vorne weist. Wenn noch genügend Zeit vorhanden ist oder kein Crash stattfindet, wird diese Crashstellung auch erreicht. Andernfalls wird die Crash-Funktion überlagert, d.h. das Prallelement 213 von der Doppelschenkelfeder mitgenommen, wobei der Führungsabschnitt 277" des Führungsstößels 277 eine freie Bewegung des Querverbinders 281 zusammen mit den Viergelenken 219 nach vorne erlaubt. Der Querverbinder 281 entfernt sich dann von der Stufe zwischen dem Führungsabschnitt 277" und dem Stößelabschnitt 277' und nähert sich dem freien Ende des Führungsstößels 277. Auf die gleiche Weise kann das Prallelement 213 im Crashfall ausgefahren werden, wenn die Pre-Crash-Funktion nicht aktiviert wurde. In allen Fällen ist die Rückstellkraft der Rückstellfeder 283 vernachlässigbar gegenüber der Kraft der Doppelschenkelfeder.

In einer Abwandlung zu diesem Ausführungsbeispiel, welche keine mechanischen Unterschiede aufweist, ist keine Pre-Crash-Funktion vorgesehen, d.h. der Servomotor 271 fährt nur die Komfortstellungen an.

### Bezugszeichenliste

- 201: Kopfstütze
- 203: Kopfstützenstange
- 205: Träger
- 207: Achse
- 211: obere Schwinge
- 213: Prallelement
- 215: untere Schwinge
- 217: Schwingenlagerbolzen
- 219: Viergelenk
- 271: Servomotor, Antrieb
- 273: Verstellhebel
- 275: Verstellbolzen
- 277: Führungsstößel
- 277': Stößelabschnitt
- 277": Führungsabschnitt
- 281: Querverbinder
- 283: Rückstellfeder

## Patentansprüche

1. Kopfstütze für einen Fahrzeugsitz, mit
a) einem Träger (205),
b) wenigstens je einer am Träger (205) angelenkten oberen und unteren Schwinge (211, 215), welche um horizontale Achsen (207, 217) schwenkbar sind,
c) einem an den Schwingen (211, 215) angelenkten Prallelement (213), welches mit den Schwingen (211, 215) und dem Träger (205) wenigstens ein Viergelenk (219) bildet,
d) einem Energiespeicher, wobei im Crashfall der Energiespeicher das Viergelenk (219) antreibt, so dass das Prallelement (213) aus einer Ausgangsstellung heraus nach vorne in eine durch eine Crashsperre nach hinten gesperrte Crashstellung ausfährt, und
e) einem Antrieb (271), mittels dessen die Kopfstütze (201) im Normalgebrauch aus der Ausgangsstellung als einer Komfortstellung heraus in wenigstens eine weitere Komfortstellung überführbar ist, und
**dadurch gekennzeichnet, dass**
f) der Antrieb (271) ein motorischer, pneumatischer oder hydraulischer Antrieb ist, der vom Energiespeicher verschieden ist und der zum Anfahren der Komfortstellungen einen Führungsstößel (277) bewegt, welcher auf das Viergelenk (219) einwirkt.

2. Kopfstütze nach Anspruch 1, **dadurch gekennzeichnet, dass** am Antrieb (271) ein schwenkbarer Verstellhebel (273) angebracht ist, welcher den Führungsstößel (277) bewegt.

3. Kopfstütze nach Anspruch 1 oder 2, **dadurch gekennzeichnet, dass** der Führungsstößel (277) einen Stößelabschnitt (277') aufweist, welcher an einem Querverbinder (281) anliegt und das Viergelenk (219) damit in Ausfahrrichtung beaufschlagt.

4. Kopfstütze nach Anspruch 3, **dadurch gekennzeichnet, dass** neben dem Führungsstößel (277) eine Rückstellfeder (283) angeordnet ist, welche das Viergelenk (219) in Einfahrrichtung beaufschlagt.

5. Kopfstütze nach Anspruch 3 oder 4, **dadurch gekennzeichnet, dass** der Führungsstößel (277) einen Führungsabschnitt (277") aufweist, welcher einen gegenüber dem Stößelabschnitt (277') geringeren Durchmesser aufweist.

6. Kopfstütze nach einem der vorhergehenden Ansprüche, **dadurch gekennzeichnet, dass** die Kopfstütze (201) mittels des Antriebs (271) bereits vor dem Crash in die Crashstellung ausfahrbar ist.

7. Kopfstütze nach einem der vorhergehenden Ansprüche, **dadurch gekennzeichnet, dass** die obere Schwinge (211) und die untere Schwinge (215) eine von der Parallelität abweichende Ausrichtung zueinander einnehmen.

8. Kopfstütze nach einem der vorhergehenden Ansprüche, **dadurch gekennzeichnet, dass** die Kopfstütze (201) nach einem Crash durch Lösen der Crashsperre reversibel rücksetzbar ist.

9. Kopfstütze nach einem der vorhergehenden Ansprüche, **dadurch gekennzeichnet, dass** der Energiespeicher eine gespannte Feder ist und dass eine schwenkbare Klinke vorgesehen ist, welche in der Ausgangsstellung die Feder wenigstens indirekt hält.

## Claims

1. Headrest for a vehicle seat, having
a) a support (205),
b) at least one upper and lower rocker (211, 215) each hinged to the support (205), which are pivotable around horizontal axles (207, 217),
c) an impact element (213) hinged to the rockers (211, 215), which forms at least one quadruple joint (219) with the rockers (211, 215) and the support (205),
d) an energy storage, the energy storage, in the event of a crash, driving the quadruple joint (219) so that the impact element (213) drives out forwardly from an initial position into a crash position that is locked rearward by a crash lock, and
e) a drive (271) by means of which, in normal use, the headrest (201) can be brought from its initial position as a comfort position to at least one other comfort position, and
**characterized in that**
f) a drive (271) is provided, which is a motorized, pneumatic or hydraulic drive, which is different from the energy storage and which, for moving to the comfort positions, moves a guide tappet (277) acting on the quadruple joint (219).

2. Headrest according to Claim 1, **characterized in that** a pivotable adjuster lever (273) moving the guide tappet (277) is mounted on the drive (271).

3. Headrest according to Claim 1 or 2, **characterized in that** the guide tappet (277) has a tappet section (277') that bears against a transverse link (281), bearing on the quadruple joint in the direction of driving out.

4. Headrest according to Claim 3, **characterized in that** a reset spring (283) is arranged next to the guide tappet (277), driving the quadruple joint (219) in the direction of driving in.

5. Headrest according to Claim 3 or 4, **characterized in that** the guide tappet (277) has a guide section (277") with a diameter smaller than that of the tappet section (277').

6. Headrest according to one of the preceding claims, **characterized in that** the headrest (201) can be driven out to the crash position by means of the drive (271) even before the crash.

7. Headrest according to one of Claims 1 to 7, **characterized in that** the upper rocker (211) and the lower rocker (215) are arranged to one another in deviation from the parallel arrangement.

8. Headrest according to one of the preceding claims, **characterized in that** after a crash, the headrest (201) can be reversibly set back by releasing the crash lock.

9. Headrest according to one of the preceding claims, **characterized in that** the energy storage device is a loaded spring and that there is a pivotable pawl which retains the spring, at least indirectly, in its initial position.

## Revendications

1. Appuie-tête pour un siège de véhicule, avec
a) un support (205) ;
b) au moins une liaison oscillante supérieure et une liaison oscillante inférieure (211, 215), chacune étant articulée au support (205), lesquelles liaisons oscillantes sont aptes à pivoter autour d'axes horizontaux (207, 217) ;
c) un élément d'impact (213) articulé aux liaisons oscillantes (211, 215), qui forme avec les liaisons oscillantes (211, 215) et le support (205) au moins un quadrilatère articulé (219) ;
d) un dispositif de stockage d'énergie, le dispositif de stockage d'énergie actionnant le quadrilatère articulé (219) en cas de choc, de telle sorte que l'élément d'impact (213) est déployé vers l'avant à partir d'une position initiale dans une position de choc bloquée vers l'arrière par un verrou de choc ; et
e) une unité d'entraînement (271), au moyen de laquelle l'appui-tête (201) est apte à être déplacé en utilisation normale de la position initiale correspondant à une position de confort dans au moins une autre position de confort, et
**caractérisé par le fait que**
f) l'unité d'entraînement (271) est une unité d'entraînement motorisée, pneumatique ou hydraulique, qui est distincte du dispositif de stockage d'énergie et qui déplace un poussoir de guidage (277) pour initialiser les positions de confort, lequel poussoir de guidage agit sur le quadrilatère articulé (219).

2. Appuie-tête selon la revendication 1, **caractérisé par le fait que**, sur l'unité d'entraînement (271) est monté un levier de réglage (273) apte à pivoter, lequel déplace le poussoir de guidage (277).

3. Appuie-tête selon l'une des revendications 1 ou 2, **caractérisé par le fait que** le poussoir de guidage (277) comprend une section de poussoir (277') qui s'appuie sur un raccord transversal (281) et sollicite ainsi le quadrilatère articulé (219) dans le sens du déploiement.

4. Appuie-tête selon la revendication 3, **caractérisé par le fait qu'**à côté du poussoir de guidage (277) est disposé un ressort de rappel (238) qui sollicite le quadrilatère articulé (219) dans le sens de la rentrée.

5. Appuie-tête selon l'une des revendications 3 ou 4, **caractérisé par le fait que** le poussoir de guidage (277) comprend une section de guidage (277") qui a un diamètre inférieur à la section de poussoir (277').

6. Appuie-tête selon l'une des revendications précédentes, **caractérisé par le fait que** l'appui-tête (201) est apte à être déployé dans la position de choc au moyen de l'unité d'entraînement (271) dès avant le choc.

7. Appuie-tête selon l'une des revendications précédentes, **caractérisé par le fait que** la liaison oscillante supérieure (211) et la liaison oscillante inférieure (215) prennent l'une par rapport à l'autre une orientation déviant du parallélisme.

8. Appuie-tête selon l'une des revendications précédentes, **caractérisé par le fait que** l'appui-tête (201) est apte à être ramené, après un choc, dans sa position initiale, de façon réversible, par déblocage du verrou de choc.

9. Appuie-tête selon l'une des revendications précédentes, **caractérisé par le fait que** le dispositif de stockage d'énergie est un ressort tendu et qu'il est prévu un cliquet apte à pivoter qui maintient le ressort dans la position initiale au moins de façon indirecte.
